## Europäisches Patentamt
## European Patent Office
## Office européen des brevets

(11) Numéro de publication: **0 190 168**
**B1**

(12) # FASCICULE DE BREVET EUROPÉEN

(45) Date de publication du fascicule du brevet:
**27.04.88**

(51) Int. Cl.⁴: **C 10 B 53/02,** C 10 J 3/66

(21) Numéro de dépôt: **85903195.7**

(22) Date de dépôt: **08.07.85**

(86) Numéro de dépôt international:
**PCT/BE 85/00014**

(87) Numéro de publication internationale:
**WO 86/00634 (30.01.86 Gazette 86/03)**

(54) **DISPOSITIF DE GAZEIFICATION DE DECHETS.**

(30) Priorité: **16.07.84 LU 85468**

(43) Date de publication de la demande:
**13.08.86 Bulletin 86/33**

(45) Mention de la délivrance du brevet:
**27.04.88 Bulletin 88/17**

(84) Etats contractants désignés:
**AT BE CH DE FR GB IT LI LU NL SE**

(56) Documents cité:
**EP-A-0 072 102**
**WO-A-79/00009**
**US-A-4 405 339**

(73) Titulaire: **COCKERILL MECHANICAL INDUSTRIES Société Anonyme, Avenue Greiner 1, B-4100 Seraing (BE)**

(72) Inventeur: **ALLARD, Georges, Alfred, Léon, 10, rue de la Dime, B-4920 Embourg- Chaudfontaine (BE)**

(74) Mandataire: **van Malderen, Michel, p.a. FREYLINGER & ASSOCIES 85/042 Boulevard de la Sauvenière, B-4000 Liège (BE)**

LIBER, STOCKHOLM 1988

## Description

La présente invention est relative à un dispositif de gazéification de déchets, notamment de déchets légers tels que des particules de bois, de papier et déchets végétaux, qui consiste en un réacteur à lit fluidisé, dans lequel s'effectue une pyrolyse et, ensuite, une combustion des déchets.

Par le document US-A-4 405 339 (Kunii) on connaît un appareil de gazéification constitué par un simple réacteur à lit fluidisé divisé en une chambre de pyrolyse et une chambre de combustion qui sont en communication par l'intermédiaire de chambres qui forment un sas. Le dispositif décrit est destiné à la production de gaz riches et est agencé pour empêcher toute dilution des gaz de pyrolyse par les gaz de combustion.

Bien qu'on connaisse déjà divers types de réacteurs à lit fluidisé pour la gazéification de déchets, la présente invention vise à fournir un réacteur de type nouveau qui convient particulièrement pour la gazéification de produits légers tels que résidus de papier, de plastique, particules de bois et déchets végétaux ...etc.

Selon la présente invention, le dispositif de gazéification de déchets est constitué par deux chambres concentriques communiquant par le bas dont une première chambre, dite chambre de pyrolyse est destinée à mettre en oeuvre la pyrolyse des déchets alimentés et dont l'autre chambre, dite chambre de combustion, est destinée à mettre en oeuvre la combustion des matières soumises à pyrolyse dans la première chambre, la combustion étant entretenue par un flux d'air avec ou sans vapeur d'eau sous pression, qui entraîne avec lui dans la chambre de combustion, par aspiration par le bas, les matières pyrolysées de la chambre de pyrolyse, le lit fluidisé de la chambre de pyrolyse étant alimenté par une partie des gaz de pyrolyse et/ou de combustion recyclée et préalablement chauffé dans la chambre de combustion et le lit fluidisé de la chambre de combustion étant alimenté par ledit flux d'air avec ou sans vapeur d'eau sous pression.

Selon une forme d'exécution préférée de la présente invention, le dispositif de gazéification de déchets est constitué par deux chambres concentriques communiquant par le bas dont la chambre extérieure constitue la chambre de pyrolyse et dont la chambre intérieure constitue la chambre de combustion.

Selon une forme d'exécution préférée de la présente invention, une partie du mélange des gaz de pyrolyse et de combustion recyclés traverse un échangeur de chaleur qui forme la paroi de séparation entre les chambres intérieure et extérieure avant d'être envoyée dans le dispositif de fluidisation de la chambre de pyrolyse.

Avantageusement, le lit fluidisé de la chambre de pyrolyse contient une matière réfractaire, incombustible et de poids comparable à celui des déchets, par exemple des petites billes d'argile expansé ou de chamotte, qui jouent le rôle de transporteur de chaleur.

On constate donc que, selon l'invention, une circulation se crée entre la chambre de pyrolyse et la chambre de combustion, grâce à l'aspiration par le bas des matières de la chambre de pyrolyse, due à la vitesse relative de l'air et/ou de la vapeur d'eau injectée dans la chambre de combustion par rapport à la vitesse des gaz de fluidisation de la chambre de pyrolyse; ceci créant des différences de densité apparente entre les deux lits.

La combustion se contrôle avantageusement par le réglage des débits relatifs de chacun des gaz et notamment par la vitesse de rotation du ventilateur qui injecte l'air ou le débit de vapeur d'eau dans la chambre de combustion, par exemple, la chambre intérieure.

Grâce à l'agencement avantageux du dispositif de gazéification de l'invention, la température du lit fluidisé de la chambre de pyrolyse est aisément maintenue constante. En effet, les billes d'argile expansé, accumulatrices de chaleur, sont également entraînées dans la circulation décrite ci-dessus et sont donc réchauffées dans la chambre de combustion avant de passer dans la chambre de pyrolyse où elles sont de nouveau aspirées par le bas dans la chambre de combustion avec les autres déchets. Par ailleurs, les gaz de fluidisation de la chambre de pyrolyse sont des gaz chauds récupérés et encore une fois préchauffés par un échangeur de chaleur disposé dans la chambre de combustion.

D'autres détails et avantages apparaîtront plus clairement à la lecture des exemples qui suivent décrits à l'appui des figures dans lesquelles
- la figure 1 est une forme d'exécution de l'invention,
- la figure 2 est une variante d'exécution selon l'invention.

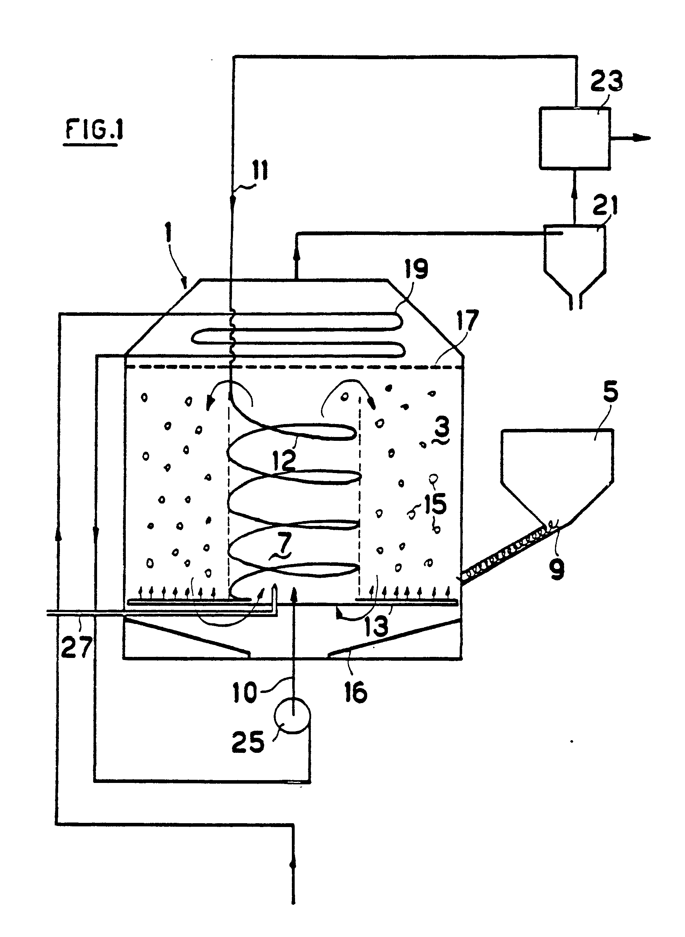

En référence à la figure 1, le dispositif de gazéification de déchets selon la présente invention est constitué par un seul réacteur à lit fluidisé 1 qui assure une pyrolyse et une combustion des déchets. Ledit dispositif de gazéification est constitué par deux chambres concentriques communiquant par le bas, dont la chambre extérieure 3 est destinée à mettre en oeuvre la pyrolyse des déchets alimentés à la périphérie par un dispositif d'alimentation 5 connu en soi, et la chambre intérieure 7 est destinée à mettre en oeuvre la combustion des matières soumises à pyrolyse dans la chambre extérieure 3. Le dispositif selon l'invention est avantageusement alimenté par des déchets déchiquetés et broyés de façon homogène et introduits dans la chambre extérieure périphérique 3 au moyen d'une vis 9 par exemple.

La combustion est entretenue par un flux d'air et/ou de vapeur d'eau sous pression 10 qui entraîne avec lui, dans la chambre de combustion 7, par aspiration par le bas, les matières pyrolysées de la chambre extérieure 3, et le lit fluidisé de la chambre extérieure 3 est alimenté par une partie des gaz de pyrolyse et/ou de combustion recyclés 11 et préalablement chauffés dans la chambre intérieure 7 en passant dans un échangeur de chaleur 12 qui forme éventuellement, en partie, la paroi de séparation entre les chambres intérieure 7 et extérieure 3. Le lit fluidisé de la chambre intérieure, dite chambre de combustion, est alimenté par le flux d'air et/ou de vapeur d'eau 10 qui provoque simultanément l'aspiration et la circulation.

Avantageusement, le dispositif de fluidisation de la chambre extérieure 3 consiste en plusieurs tubes perforés disposés en étoile 13 dont les perforations sont dirigées vers le haut et dans lesquels se répartit le gaz de fluidisation de la chambre extérieure 3 en venant de l'échangeur 12. Il est bien évident que l'invention n'est pas limitée à cette forme d'exécution et que le dispositif de fluidisation 13 peut également consister en un tube perforé enroulé en spirale par exemple.

De préférence, le lit fluidisé de la chambre extérieure 3 contient des matières de charge telles que des petites billes d'argile expansé 15 qui jouent un rôle de régulateur de chaleur. En effet, celles-ci sont également aspirées dans la chambre de combustion et y sont réchauffées avant de repasser dans la chambre extérieure 3.

Avantageusement, le dispositif de gazéification selon l'invention comporte également, à la partie inférieure, un dispositif de récupération des cendres 16. De même, il peut être équipé, à la partie supérieure, d'une grille 17 qui évite le cas échéant l'envol de matières trop légères, telles que du papier par exemple.

Selon une forme d'exécution préférée de la présente invention, l'air et/ou la vapeur d'eau injectés dans la chambre de combustion sont préchauffés dans un échangeur de chaleur 19 disposé dans le circuit de gaz de combustion et/ou de pyrolyse. Etant donné que la température des gaz de combustion et/ou de pyrolyse est de l'ordre de 600 à 700°C, on peut réchauffer l'air de combustion à une température de l'ordre de 400°C.

Selon une forme d'exécution particulièrement avantageuse, les gaz de combustion et/ou de pyrolyse sont recyclés dans un dépoussiéreur par cyclone 21 et, éventuellement, ensuite dans un dépoussiéreur humide 23 avant d'être recyclés, au moins partiellement, comme gaz de fluidisation de la chambre extérieure 3.

Par ailleurs, la vitesse de combustion peut avantageusement être réglée facilement par la vitesse de rotation du ventilateur 25 disposé dans le circuit d'injection d'air et/ou de vapeur d'eau dans la chambre de combustion 7.

L'énergie récupérée du dispositif de gazéification selon la présente invention peut être l'énergie calorifique retirée des gaz chauds, que l'on utilise pour générer de la vapeur d'eau par exemple qui peut être injectée dans la chambre de combustion 7 ; elle peut également être de l'énergie emmagasinée dans des gaz riches provenant de la pyrolyse, qui peuvent être utilisés pour entraîner une turbine à gaz ou qui peuvent être brûlés dans une chaudière en vue de générer de la vapeur.

Le dispositif de gazéification selon la présente invention peut évidemment êtré équipé d'une série de dispositifs annexes, notamment de dispositifs destinés au démarrage de l'installation. Ainsi, il peut être muni d'une rampe à gaz 27 qui est destinée à démarrer la combustion. En outre, lors du démarrage, la fluidisation du lit peut s'effectuer grâce à une injection d'air au moyen d'un dispositif annexe non représenté.

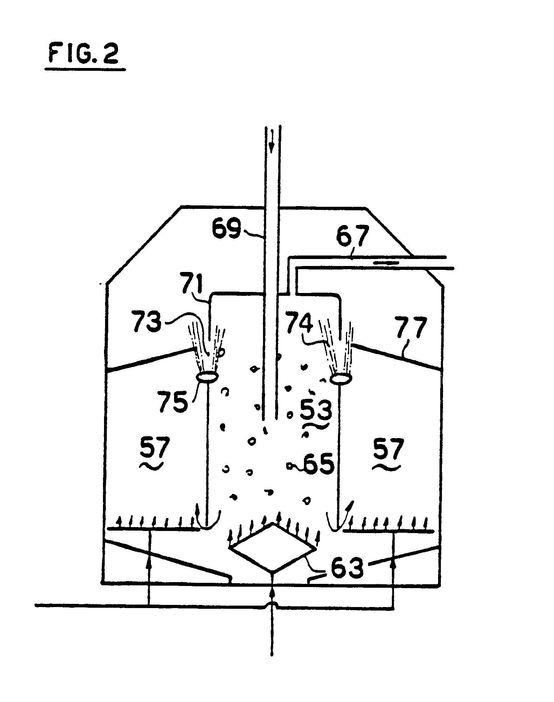

Selon une autre forme d'exécution de l'invention (figure 2), la chambre intérieure constitue la chambre de pyrolyse 53 et la chambre extérieure constitue la chambre de combustion 57. Comme précédemment, les matières et gaz de pyrolyse sont aspirés par le bas dans la chambre de combustion extérieure 57, mais les matières combustibles sont alimentées par le centre au moyen d'un dispositif d'alimentation et de fluidisation central 63.

En vue d'éviter que des gaz riches récupérables 67 de pyrolyse ne se mélangent avec des gaz de combustion, on peut prévoir un couvercle 71 sur la chambre centrale au moins du dispositif de gazéification selon l'invention, une section de passage 73 étant maintenue entre les deux chambres à la partie supérieure. Avantageusement, le couvercle 71 est traversé par un conduit 69 qui se prolonge dans le lit fluidisé de la chambre centrale et qui facilite la circulation.

Pour que les gaz ne traversent pas cette section de passage 73, celle-ci peut comporter un "rideau" d'air, de gaz ou de vapeur 74 qui laisse passer les matières solides mais qui empêche le passage de gaz. Avantageusement un tel rideau peut être formé par un jet d'air de gaz ou de vapeur unique ou par deux jets disposés chacun de part et d'autre de la paroi de séparation.

Pour ce faire, la chambre centrale comporte à sa partie supérieure, immédiatement en dessous de la section de passage, un joint circulaire 75 de section creuse, muni d'au moins une série de perforations d'un côté au moins de la paroi de séparation ou du bord inférieur du couvercle 71.

En variante, la chambre périphérique peut également comporter des déflecteurs 77 inclinés vers le bas ou s'éloignant du centre.

Il est bien évident que la présente invention ne se limite pas aux formes d'exécution décrites mais s'étend au cadre défini par les revendications.

**Revendications**

1. Dispositif de gazéification de déchets, consistant en un seul réacteur à lit fluidisé (1) qui assure une pyrolyse et une combustion des déchets, caractérisé en ce qu'il est constitué par deux chambres concentriques communiquant par le bas, dont une première chambre, dite chambre de pyrolyse (3) est destinée à mettre en oeuvre la pyrolyse des déchets alimentés et l'autre chambre, dite chambre de combustion (7) est destinée à mettre en oeuvre la combustion des matières soumises à pyrolyse dans la chambre de pyrolyse (3), la combustion étant entretenue par un flux d'air avec ou sans vapeur d'eau sous pression (10), qui entraîne avec lui dans la chambre de combustion (7), par aspiration par le bas, les matières pyrolysées de la chambre de pyrolyse (3), le lit fluidisé de la chambre de pyrolyse (3) étant alimenté par une partie des gaz de pyrolyse et/ou de combustion recyclés (11) et préalablement chauffés dans la chambre de combustion (7), et le lit fluidisé de la chambre de combustion étant alimenté par ledit flux d'air avec ou sans vapeur d'eau sous pression.

2. Dispositif de gazéification selon la revendication 1 caractérisé en ce que la chambre extérieure constitue la chambre de pyrolyse (3) et en ce que la chambre intérieure constitue la chambre de combustion (7), les deux chambres communiquant par le bas et la chambre extérieure étant alimentée à la périphérie.

3. Dispositif de gazéification selon la revendication 1 caractérisé en ce que la chambre intérieure constitue la chambre de pyrolyse (53) et la chambre extérieure constitue la chambre de combustion (57), les matières combustibles étant alimentées par le centre au moyen d'un dispositif d'alimentation central (63).

4. Dispositif suivant la revendication 3 caractérisé en ce que la chambre centrale au moins du dispositif de gazéification comporte un couvercle, une section de passage étant ménagée entre les deux chambres, à la partie supérieure.

5. Dispositif suivant la revendication 4 caractérisé en ce que la section de passage comporte un "rideau" d'air, de gaz ou de vapeur constitué par un ou deux jets disposés de part et d'autre de la paroi de séparation.

6. Dispositif suivant la revendication 4 ou 5 caractérisé en ce que la chambre extérieure comporte des déflecteurs inclinés vers le bas en s'éloignant du centre.

7. Dispositif de gazéification selon l'une quelconque des revendications précédentes caractérisé en ce qu'une partie du mélange des gaz de pyrolyse et de combustion recyclés traverse un échangeur de chaleur qui forme la paroi de séparation entre les chambres de combustion et de pyrolyse avant d'être envoyée dans le dispositif de fluidisation de la chambre de pyrolyse.

8. Dispositif selon l'une quelconque des revendications précédentes caractérisé en ce que le dispositif de fluidisation de la chambre de pyrolyse est constitué par plusieurs tubes perforés disposés en étoile, ou par un tube perforé agencé en spirale, les perforations étant dirigées vers le haut.

9. Dispositif suivant l'une quelconque des revendications précédentes caractérisé en ce que les chambres de pyrolyse et de combustion communiquent par le haut et par le bas et en ce que le lit fluidisé dans la chambre de pyrolyse contient des petites billes d'argile expansée.

10. Dispositif suivant l'une quelconque des revendications précédentes caractérisé en ce qu'il comporte, à sa partie inférieure, un dispositif de récupération des cendres.

11. Dispositif suivant l'une quelconque des revendications précédentes caractérisé en ce qu'il comporte, à sa partie supérieure, une grille.

12. Dispositif suivant l'une quelconque des revendications précédentes caractérisé en ce que l'air avec ou sans vapeur d'eau injecté dans la chambre de combustion est préchauffé dans un échangeur de chaleur disposé dans le circuit des gaz de combustion et/ou de pyrolyse.

13. Dispositif suivant l'une quelconque des revendications précédentes caractérisé en ce que les gaz de combustion et/ou de pyrolyse passent dans un dépoussiéreur par cyclone et/ou dans un dépoussiéreur humide, avant d'être recyclés partiellement.

## Claims

1. Device for the gasification of waste, consisting of a single fluidized bed reactor (1) which is responsible for the pyrolysis and combustion of the waste, characterized in that it consists of two concentric chambers communicating at the bottom, wherein a first chamber, called a pyrolysis chamber (3) is intended to implement the pyrolysis of the waste supplied, and the other chamber, called a combustion chamber (7) is intended to implement the combustion of the matter subjected to pyrolysis in the pyrolysis chamber (3), the combustion being maintained by a stream of air with or without steam under pressure (10) which entrains the pyrolyzed matter from the pyrolysis chamber (3) into the combustion chamber (7), by induction through the bottom, the fluidized bed of the pyrolysis chamber (3) being supplied by a part of the pyrolysis and/or combustion gases which are recycled (11) and heated beforehand in the combustion chamber (7), and the fluidized bed in the combustion chamber being supplied by the said stream of air with or without steam under pressure.

2. Gasification device as claimed in claim 1, characterized in that the outer chamber forms the pyrolysis chamber (3) and in that the inner chamber forms the combustion chamber (7), both chambers communicating at the bottom and the outer chamber being supplied at the periphery.

3. Gasification device as claimed in claim 1, characterized in that the inner chamber forms the pyrolysis chamber (53) and the outer chamber forms the combustion chamber (57), the combustible matter being supplied via the center by means of a central feeding device (63).

4. Device as claimed in claim 3, characterized in that at least the central chamber of the gasification device comprises a cover, a passage section being arranged between the top parts of both chambers.

5. Device as claimed in claim 4, characterized in that the passage section comprises an air, gas or steam "screen" consisting of one or two jets arranged on either side of the dividing wall.

6. Device as claimed in claim 4 or 5 characterized in that the outer chamber comprises baffles sloping casewards or away from the center.

7. Gasification device as claimed in any one of the preceding claims, characterized in that a part of the mixture of recycled pyrolysis and combustion gases passes through a heat exchanger which forms the dividing wall between the combustion chamber, before being conveyed into the fluidization device in the pyrolysis chamber.

8. Device as claimed in any one of the preceding claims, characterized in that the fluidization device in the pyrolysis chamber consists of several perforated pipes arranged in the form of a star, or of a perforated pipe arranged in a spiral, the perforation facing upwards.

9. Device as claimed in any one of the preceding claims characterized in that the pyrolysis chamber and the combustion chamber communicate at the top and at the bottom and in that the fluidized bed of the pyrolysis chamber contains small expanded clay beads.

10. Device as claimed in any one of the preceding claims, characterized in that it comprises, in its lower part, a device for the recovery of ash.

11. Device as claimed in any one of the preceding claims, characterized in that it comprises a grid in its upper part. 12.

12. Device as claimed in any one of the preceding claims, characterized in that the air injected with or without steam into the combustion chamber is preheated in a heat exchanger arranged in the combustion and/or pyrolysis gases circuit.

13. Device as claimed in any one of the preceding claims, characterized in that the combustion and/or pyrolysis gases pass through a cyclone dust-extractor and/ or through a wet dust-extractor, before being partially recycled.

**Patentansprüche**

Abfall-Vergasungseinrichtung, bestehend aus einem einzigen Wirbelbettreaktor (1), der die thermische Zersetzung und Verbrennung der Abfälle sicherstellt, dadurch gekennzeichnet, daß er aus zwei konzentrischen, unter verbundenen Kammern besteht und die erste Kammer, die sogenannte Pyrolyse-Kammer (3) zur thermischen Zersetzung der eingebrachten Abfälle dient und die zweite Kammer, die sogenannte Verbrennungskammer (7), zur Verbrennung des in der Pyrolyse-Kammer (3) thermisch zersetzten Materials dient und die Verbrennung aufrechterhalten wird durch einen Luftstrom mit oder ohne Wasserdampf unter Druck (10), der durch Ansaugung von unten das in der Pyrolyse-Kammer (3) thermisch zersetzte Material in die Verbrennungskammer (7) mitführt, wobei das Wirbelbett der Pyrolysekammer (3) durch einen Teil der Pyrolyse- und/oder rückgeführten Verbrennungsgase (11), die vorher in der Verbrennungskammer (7) aufgeheizt wurden, gespeist wird und wobei das Wirbelbett der Verbrennungskammer durch besagten Luftstrom mit oder ohne Wasserdampf unter Druck gespeist wird.

2. Vergasungseinrichtung gemäß Anspruch 1, dadurch gekennzeichnet, daß die äußere Kammer die Pyrolyse-Kammer (3) darstellt und daß die innere Kammer die Verbrennungskammer (7) darstellt und beide Kammern unten verbunden sind und die äußere Kammer am Umfang gespeist wird.

3. Vergasungsvorrichtung gemäß Anspruch 1, dadurch gekennzeichnet, daß die innere Kammer die Pyrolyse-Kammer (53) und die äußere Kammer die Verbrennungskammer (57) darstellt und das brennbare Material mittels einer mittigen Speiseeinrichtung (63) eingespeist wird.

4. Einrichtung gemäß Anspruch 3, dadurch gekennzeichnet, daß die mittige Kammer, zumindest die Vergasungseinrichtung im oberen Teil, einen Deckel und einen Durchlaß zwischen den beiden Kammern umfaßt.

5. Einrichtung gemäß Anspruch 4, dadurch gekennzeichnet, daß der Durchlaß einen Luft- Gas- oder Dampf-"Vorhang" umfaßt, der aus einem oder zwei Strahl(en) besteht, wobei jeweils ein Strahl auf jeder Seite der Trennwand eingesetzt wird.

6. Einrichtung gemäß Anspruch 4 oder 5, dadurch gekennzeichnet, daß die äußere Kammer mit von in der Mitte ausgehend nach unten geneigten Ablenkern ausgerüstet ist.

7. Vergasungseinrichtung gemäß Ansprüche 1 bis 6, dadurch gekennzeichnet, daß ein Teil des rückgewonnenen Gasgemisnces der Pyrolyse und der Verbrennung, bevor es in die Wirbelbetteinrichtung der Pyrolyse-Kammer befördert wird, einen Wärmetauscher durchströmt, der die Trennwand zwischen der Verbrennungskammer und der Pyrolyse-Kammer bildet.

8. Einrichtung gemäß Ansprüchen 1 bis 7, dadurch gekennzeichnet, daß die Wirbelbetteinrichtung der Pyrolyse-Kammer aus mehreren perforierten, strahlenförmig angeordneten Rohren oder aus einem perforierten, spiralförmig angeordretem Rohr mit nach oben gerichteten Perforationen, besteht.

9. Einrichtung gemäß Ansprüchen 1 bis 8, dadurch gekennzeichnet, daß die Pyrolyse-Kammer und die Verbrennungskammer oben und unten verbunden sind und daß das Wirbelbett der Pyrolyse-Kammer kleine, porig-zellige Tonkugeln enthält.

10. Einrichtung gemäß Ansprüchen 1 bis 9, dadurch gekennzeichnet, daß sie im unteren Teil eine Aschenrückgewinnungseinrichtung umfaßt.

11. Einrichtung gemäß Ansprüchen 1 bis 10, dadurch gekennzeichnet, daß sie im oberen Teil einen Rost umfaßt.

12. Einrichtung gemäß Ansprüchen 1 bis 11, dadurch gekennzeichnet, daß die in die Verbrennungskammer eingeblasene Luft mit oder ohne Wasserdampf in einem Wärmetauscher vorgewärmt wird, der im Verbrennungs- und/oder Pyrolysegaskreis angebracht ist.

13. Einrichtung gemäß Ansprüchen 1 bis 12, dadurch gekennzeichnet, daß die Verbrennungs- und/oder Pyrolysegase einen Zyklon-Staubabscheider und/oder einen Naß-Staubabscheider durchströmen, bevor sie teilweise wieder rückgeführt werden.

FIG.1

# FIG. 2